# EUROPÄISCHE PATENTSCHRIFT

(11) **EP 1 087 877 B1**
(45) Veröffentlichungstag und Bekanntmachung des Hinweises auf die Patenterteilung: **18.08.2004**
(21) Anmeldenummer: 99938141.1
(22) Anmeldetag: 07.06.1999
(51) Int. Cl.: B60L 11/12, B60L 15/20

(54) **STEUERUNGSSYSTEM FÜR EIN AUS MINDESTENS EINEM ENERGIESPEICHER UND EINER ENERGIEQUELLE BESTEHENDES HYBRIDSYSTEM**
CONTROL SYSTEM FOR A HYBRID SYSTEM CONSISTING OF AT LEAST ONE ENERGY ACCUMULATOR AND ONE ENERGY SOURCE
SYSTEME DE COMMANDE POUR UN SYSTEME HYBRIDE CONSTITUE AU MOINS D'UN ACCUMULATEUR D'ENERGIE ET D'UNE SOURCE D'ENERGIE

(30) Priorität: 15.06.1998 DE 19826551
(43) Veröffentlichungstag der Anmeldung: 04.04.2001
(73) Patentinhaber: SIEMENS AKTIENGESELLSCHAFT, 80333 München (DE)
(72) Erfinder: HOLL, Eugen, D-90579 Langenzenn (DE); LANG, Hans-Peter, D-91077 Neunkirchen (DE); FETZER, Jürgen, D-91056 Erlangen (DE); SCHMIDT, Manfred, D-91074 Herzogenaurach (DE)
(86) Internationale Anmeldenummer: PCT/DE1999/001670
(87) Internationale Veröffentlichungsnummer: WO 1999/065725

(56) Entgegenhaltungen:
- EP-A- 0 543 037
- EP-A- 0 782 941
- EP-A- 0 830 968
- DE-A- 19 617 548
- DE-A- 19 624 252

## Beschreibung

Die vorliegende Erfindung betrifft ein Steuerungssystem für ein aus mindestens einem Energiespeicher und einer Energiequelle bestehendes Hybridsystem, wobei das Steuerungssystem aus einem Ladezustand des mindestens einen Energiespeichers, einem Sollbetriebspunkt der Energiequelle und einer momentan abzugebenden Systemleistung gemäß mindestens einem Optimierungskriterium eine von dem mindestens einen Energiespeicher abzugebende bzw. aufzunehmende Speicherleistung und eine von der Energiequelle abzugebende Quellenleistung ermittelt.

Aus der DE 196 17 548 A1 ist ein Kraftfahrzeug mit einem derartigen Steuerungssystem bekannt. Das Kraftfahrzeug ist elektromotorisch antreibbar und weist einen Energiespeicher auf. Zum Aufladen dieses Energiespeichers ist eine Verbrennungskraftmaschine, die mit einem Generator verbunden ist, vorhanden. Die Steuerung des Aufladeprozesses geschieht mittels eines Steuergerätes.

Aus der EP-A-0 543 037 ist ein integrierter Schaltkreis bekannt, bei dem Signalart und Signalpegel parametrierbar sind. Es wird aber keine Steuerung eines Hybridsystems vorgenommen.

Ein Steuerungssystem ist auch aus der DE 196 24 252 A1, aus der DE 195 05 726 A1 und aus der DE 43 41 817 A1 bekannt.

Je nach Konfiguration und Auslegung von Energiespeicher und Energiequelle kann das Leistungsverhältnis zwischen beiden schwanken. In allen Fällen aber ist die Energiequelle ein Verbrennungsmotor mit angekoppeltem Generator, der Energiespeicher eine Batterie.

Im Stand der Technik werden Steuerungssysteme für Hybridsysteme stets speziell für das jeweilige Hybridsystem ausgelegt. Es wird also für jedes Hybridsystem ein eigenes Steuerungssystem gebildet.

Aus der DE 29 52 500 C2 ist eine Steuereinheit bekannt, mittels derer einer von mehreren Teilabschnitten eines Speichers selektierbar ist. Die Steuereinheit ist insbesondere in einem Bordcomputer für Kraftfahrzeuge einsetzbar.

Die Aufgabe der vorliegenden Erfindung besteht darin, ein Steuerungssystem zu schaffen, welches universell bei einer Vielzahl von Hybridsystemen einsetzbar ist. Insbesondere soll ein Steuerungssystem geschaffen werden, das nicht auf eine spezielle Kombination eines bestimmten Energiespeichers mit einer bestimmten Energiequelle festgelegt ist. Beispielsweise soll der mindestens eine Energiespeicher eine Batterie, ein Super-Kondensator oder ein Schwungrad sein können. Die Energiequelle soll beispielsweise ein Verbrennungsmotor mit angekoppeltem Generator, eine Brennstoffzelle oder eine Oberleitung sein können. Auch soll das Leistungsverhältnis zwischen Energiespeicher und Energiequelle deutlich schwanken können, z. B. zwischen 15:85 und 85:15.

Die Aufgabe wird dadurch gelöst, daß zur Ermittlung der Speicherleistung und der Quellenleistung auch mindestens ein Ladegrenzwert und ein mindestens Entladegrenzwert für den mindestens einen Energiespeicher und ein Leistungsgrenzwert für die Energiequelle mit herangezogen werden und daß der mindestens eine Ladegrenzwert, der mindestens eine Entladegrenzwert, der Leistungsgrenzwert und der Sollbetriebspunkt über eine Schnittstelle des Steuerungssystems parametrierbar sind.

Das Steuerungssystem ist noch flexibler, wenn dem Steuerungssystem als Ladegrenzwerte ein aufgrund des mindestens einen Energiespeichers gegebener Energiespeicherladegrenzwert und ein eingebbarer Eingabeladegrenzwert vorgegeben werden.

Das Steuerungssystem ist auch dann flexibler, wenn dem Steuerungssystem als Entladegrenzwerte ein aufgrund des mindestens einen Energiespeichers gegebener Energiespeicherentladegrenzwert und ein eingebbarer Eingabeentladegrenzwert vorgegeben werden.

Die Flexibilität des Steuerungssystems wird noch weiter erhöht, wenn das mindestens eine Optimierungskriterium über die Schnittstelle des Steuerungssystems vorgebbar ist.

Das Steuerungsverhalten des Steuerungssystems ist noch weiter optimiert, wenn es aus dem Ladezustand des mindestens einen Energiespeichers anhand von Leistungskennwerten des mindestens einen Energiespeichers einen Zustandsladegrenzwert, einen Zustandsentladegrenzwert und eine Quellenladeleistung ermittelt, die Leistungskennwerte zumindest einen Minimalenergieinhalt und einen Maximalenergieinhalt umfassen und auch die Leistungskennwerte über die Schnittstelle des Steuerungssystems vorgebbar sind.

Der Energiespeicher wird optimal ausgenutzt, wenn das Steuerungssystem aus dem Ladezustand des mindestens einen Energiespeichers eine abzugebende Grenzsystemleistung ermittelt, bei der der Energiespeicher von Energieaufnahme auf Energieabgabe und umgekehrt umgeschaltet wird.

Wenn die Grenzsystemleistung hysteresebehaftet ist, wird ein ständiges Umschalten zwischen Laden und Entladen vermieden.

Wenn das Steuerungssystem anhand des Leistungsgrenzwertes und des Sollbetriebspunkts ermittelt, ob bei Überschreiten oder bei Unterschreiten der Grenzsystemleistung von Energieaufnahme auf Energieabgabe umgeschaltet wird, muß der Anwender des Steuerungssystems dies nicht parametrieren.

Der Ladezustand des mindestens einen Energiespeichers wird noch weiter optimiert, wenn die Grenzsystemleistung nachgeführt wird, wenn der Ladezustand des Energiespeichers den Minimalenergieinhalt unterschreitet bzw. den Maximalenergieinhalt überschreitet.

Übermäßige Änderungen der Quellenleistung werden vermieden, wenn die Speicherleistung über eine Rampe als erstes Eingangssignal einem Addierer zugeführt wird, dem als zweites Eingangssignal die abzugebende Systemleistung zugeführt wird, und als Ausgangssignal die Quellenleistung ausgegeben wird.

Weitere Vorteile und Einzelheiten ergeben sich aus der nachfolgenden Beschreibung eines Ausführungsbeispiels. Dabei zeigen in Prinzipdarstellung:
- Fig. 1: ein Hybridsystem mit zugehörigem Steuerungssystem,
- Fig. 2: ein Verfahren zur Berechnung von Ladegrenzwerten und
- Fig. 3: ein Teilverfahren zur Berechnung der Speicherleistung.

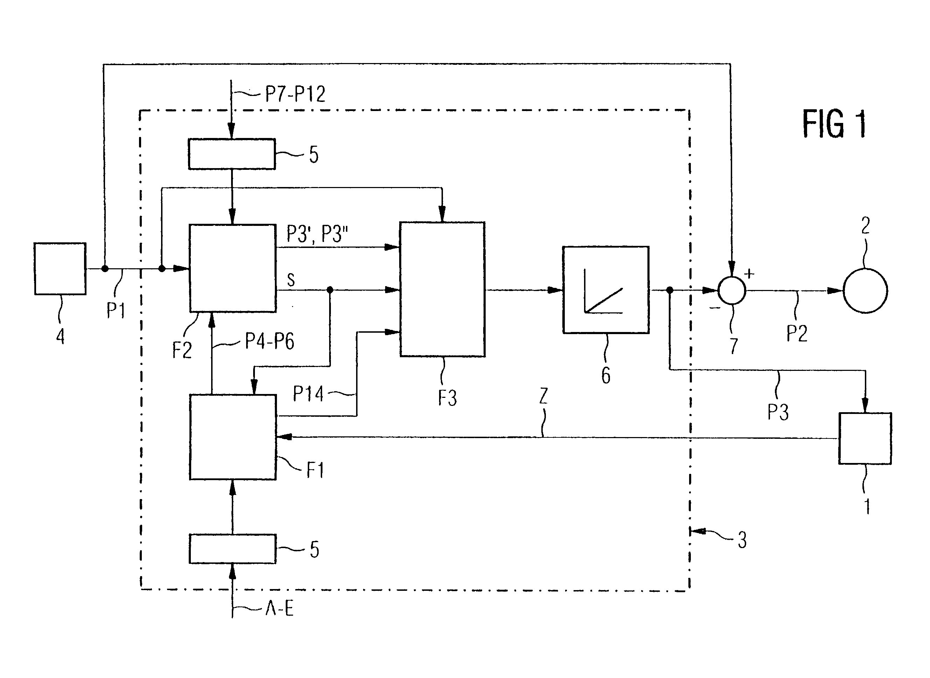

Gemäß Fig. 1 besteht ein Hybridsystem aus einem Energiespeicher 1 und einer Energiequelle 2. Der Energiespeicher 1 ist im vorliegenden Fall als elektrische Batterie ausgebildet. Die Energiequelle 2 ist als Verbrennungsmotor mit nachgeschaltetem Generator oder als Brennstoffzelle ausgebildet. Das Hybridsystem wird von einem Steuerungssystem gesteuert, das aus einem Rechenblock 3 und einem Addierer 7 besteht. Es wird z. B. in einem Stadtbus eingesetzt.

Zur Steuerung des Hybridsystems wird dem Rechenblock 3 als Eingangssignal über einen geeigneten Sollwertgeber 4 - z.B. ein Fahrpedal eines Busses - eine momentan abzugebende Systemleistung P1 eingegeben. Der Rechenblock 3 ermittelt dann eine von der Energiequelle 2 abzugebende Quellenleistung P2. Eine vom Energiespeicher 1 abzugebende bzw. aufzunehmende Speicherleistung P3 stellt sich dann zwangsläufig als die Differenz zwischen Systemleistung P1 und Quellenleistung P2 ein.

Die Ermittlung der Quellenleistung P2 erfolgt gemäß mindestens einem Optimierungskriterium. Optimierungskriterium kann beispielsweise die Minimierung des Primärenergieverbrauchs, die Minimierung der Erzeugung von Schadstoffen oder die Minimierung des vom Hybridsystem erzeugten Geräuschs sein. Um den Rechenblock 3 möglichst flexibel zu gestalten, ist das Optimierungskriterium dem Rechenblock 3 über eine Schnittstelle 5 vorgebbar und somit parametrierbar.

Zur Optimierung des Betriebs des Hybridsystems wird innerhalb des Rechenblocks 3 vorab intern ermittelt, welche Speicherleistung P3 vom Energiespeicher 1 abgegeben bzw. aufgenommen werden soll.

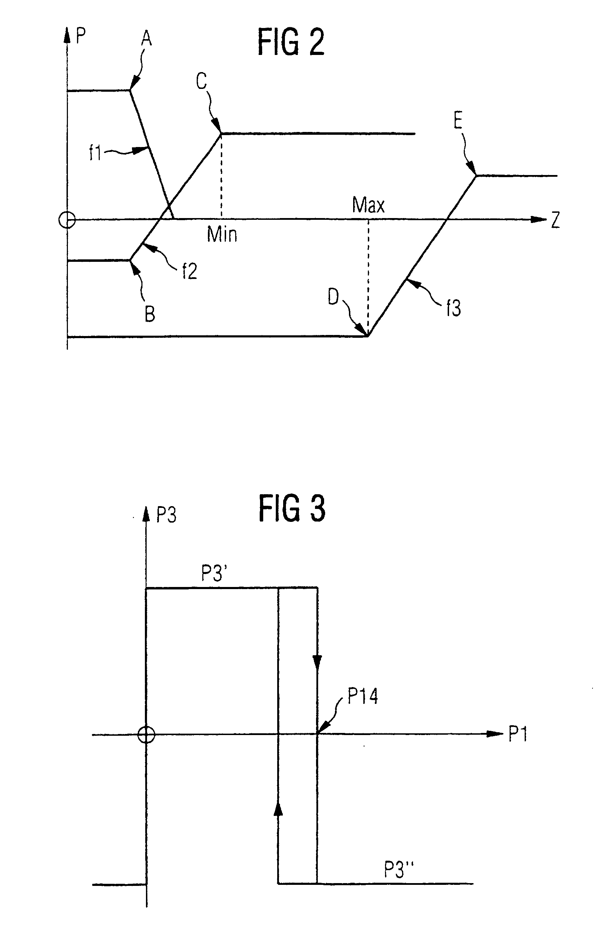

Zur Ermittlung der Speicherleistung P3 werden einem ersten Funktionsblock F1 über die Schnittstelle fünf Leistungskennwerte des Energiespeichers 1 vorgegeben. Sie sind also parametrierbar. Die Leistungskennwerte definieren fünf Punkte A - E in einem Zustandsdiagramm - vgl. Fig. 2. Nach oben in Fig. 2 ist Leistung aufgetragen, nach rechts der Ladezustand des Energiespeichers 1.

Der Punkt A definiert eine Leistungsanforderungsfunktion f1. Die Leistungsanforderungsfunktion f1 ist links des Punktes A konstant und fällt rechts linear bis auf 0 ab. Die Punkte B und C definieren eine Zustandsentladefunktion f2. Die Zustandsentladefunktion f2 verläuft links des Punktes B und rechts des Punktes C waagerecht und steigt zwischen den Punkten B und C linear an. Die Punkte D und E definieren eine Zustandsladefunktion f3. Die Zustandsladefunktion f3 verläuft links des Punktes D und rechts des Punktes E ebenfalls waagerecht und steigt zwischen den Punkten D und E linear an.

Dem Funktionsblock F1 wird ein tatsächlicher Ladezustand Z des Energiespeichers 1 zugeführt. Der Funktionsblock F1 ermittelt mit diesem Ladezustand Z dann aus den Funktionen f2 und f3 einen Zustandsladegrenzwert P4 und einen Zustandsentladegrenzwert P5 sowie aus der Funktion f1 eine Quellenladeleistung P6.

Die Z-Werte der Punkte C und D definieren implizit einen Minimalenergieinhalt Min und einen Maximalenergieinhalt Max für den Energiespeicher 1. Der tatsächliche Ladezustand Z des Energiespeichers 1 sollte vorzugsweise stets zwischen diesen beiden Werten Min, Max liegen.

Der Zustandsladegrenzwert P4, der Zustandsentladegrenzwert P5 und die Quellenladeleistung P6 werden an einen Funktionsblock F2 weitergegeben. Dem Funktionsblock F2 wird als variable ferner die Systemleistung P1 zugeführt. Als Parameter werden dem Funktionsblock F2 über die Schnittstelle 5 zwei weitere Ladegrenzwerte P7, P8, zwei weitere Entladegrenzwerte P9, P10, ein Sollbetriebspunkt P11 und ein Leistungsgrenzwert P12 der Energiequelle 2 vorgegeben. Auch die Werte P7 bis P12 sind also parametrierbar.

Die beiden weiteren Ladegrenzwerte P7, P8 umfassen einen Energiespeicherladegrenzwert P7 und einen Eingabeladegrenzwert P8. Der Energiespeicherladegrenzwert P7 ist aufgrund des Energiespeichers 1 bestimmt. Der Eingabeladegrenzwert P8 ist beliebig wählbar. Ebenso ist der Energiespeicherentladegrenzwert P9 durch die Gegebenheiten des Energiespeichers 1 bestimmt. Der Eingabeentladegrenzwert P10 hingegen ist willkürlich wählbar.

Der Sollbetriebspunkt P11 gibt an, bei welcher Quellenleistung P2 die Energiequelle 2 optimal betrieben wird. Der Leistungsgrenzwert P12 gibt an, welche Leistung die Energiequelle 2 maximal liefern kann.

Im Funktionsblock F2 wird zunächst ein Leistungsminimum P13 aus der Quellenladeleistung P6, dem Sollbetriebspunkt P11 und dem Leistungsgrenzwert P12 bestimmt.

Sodann wird eine maximale Speicherleistung P3' im Entlademcdus bestimmt. Die maximale Speicherleistung P3' im Entlademodus ergibt sich als das Minimum folgender vier Leistungen: Dem Zustandsentladegrenzwert P5, dem Energiespeicherentladegrenzwert P9, dem Eingabeentladegrenzwert P10 und der Differenz von Systemleistund P1 und Leistungsminimum P13. Man beachte, daß die maximale Speicherleistung P3' im Entlademodus sowohl positiv als auch negativ sein kann und von der angeforderten Systemleistung P1 abhängt.

Sodann wird eine maximale Speicherleistung P3" im Lademodus bestimmt. Die maximale Speicherleistung P3" im Lademodus ergibt sich als das Maximum folgender vier Leistungen: Dem Zustandsladegrenzwert P4, dem Energiespeicherladegrenzwert P7, dem Eingabeladegrenzwert P8 und der Differenz von Systemleistung P1 und Sollbetriebspunkt P11.

Um die Energiequelle 2 optimal zu betreiben, sollte sie z.B. entweder völlig stillstehen oder in der Nähe ihres Sollbetriebspunktes P11 betrieben werden. Die maximalen Speicherleistungen P3', P3" im Endlade- bzw. Lademodus werden daher derart bestimmt, daß dies der Fall ist. Die maximalen Speicherleistungen P3', P3" sind dabei, wie bereits erwähnt, von der Systemleistung P1 abhängig.

Zur Ermittlung der Speicherleistung P3 werden die maximalen Speicherleistungen P3', P3" vom Funktionsblock F2 an einen Funktionsblock F3 weitergegeben. Ferner übermittelt der Funktionsblock F2 ein binäres Steuersignal s an den Funktionsblock F3. Schließlich wird dem Funktionsblock F3 vom Funktionsblock F1 noch eine Grenzsystemleistung P14 vorgegeben. Die Grenzsystemleistung P14 wird vom Funktionsblock F1 aus dem Ladezustand Z des Energiespeichers 1 ermittelt. Bei Überschreiten bzw. Unterschreiten der Grenzsystemleistung P14 wird der Energiespeicher 1 von Energieaufnahme auf Energieabgabe und umgekehrt umgeschaltet.

Die Funktionalität des Funktionsblocks F3 ist in Fig. 3 dargestellt. Nach rechts ist in Fig. 3 die Systemleistung P1 aufgetragen, nach oben die Speicherleistung P3. Ersichtlich ist die Grenzsystemleistung P14 hysteresebehaftet, so daß ein ständiges Umschalten des Energiespeicherbetriebes vermieden wird.

Bei dem in Fig. 3 dargestellten Leistungsdiagramm wird der Energiespeicher 1 bei Überschreiten der Grenzsystemleistung P14 von Energieabgabe auf Energieaufnahme umgeschaltet. Je nachdem, ob das Steuersignal s den Wert 0 oder 1 hat, kann aber bei Überschreiten der Grenzsystemleistung P14 auch von Energieaufnahme auf Energieabgabe umgeschaltet werden. Der Wert des Steuersignals s ist parametrierbar und richtet sich nach den Eigenschaften der Energiequelle 2.

Der Funktionsblock F3 ermittelt somit aus der Systemleistung P1 die Speicherleistung P3, welche über eine Rampe 6 als erstes Eingangssignal einem Addierer 7 zugeführt wird. Als zweites Eingangssignal wird dem Addierer 7 die abzugebende Systemleistung P1 zugeführt. Als Ausgangssignal liefert der Addierer 7 dann die Quellenleistung P2. Die tatsächliche Speicherleistung P3 des Hybridsystems stellt sich zwangsläufig als Differenz von Systemleistung P1 und Quellenleistung P2 ein.

Der tatsächliche Ladezustand Z des Energiespeichers 1 wird im Funktionsblock F1 laufend überwacht. Wenn der Ladezustand Z des Energiespeichers 1 aufgrund des tatsächlichen Belastungszyklus zwischen dem Minimalenergieinhalt Min und dem Maximalenergieinhalt Max bleibt, wird die Grenzsystemleistung P14 beibehalten. Wenn hingegen der Minimalenergieinhalt Min unterschritten bzw. der Maximalenergieinhalt Max überschritten wird, ist dies ein Indiz dafür, daß die Grenzsystemleistung P14 nicht optimal gewählt ist. In diesem Fall wird daher die Grenzsystemleistung P14 nachgeführt.

Das Steuerungssystem ist universell einsetzbar. Es ist nicht auf eine bestimmte Kombination von Energiespeicher 1 und Energiequelle 2 beschränkt. Insbesondere muß der Energiespeicher 1 nicht eine Batterie sein. Er könnte ebenso ein Super-Kondensator oder ein Schwungrad sein. Auch die Energiequelle 2 muß nicht ein als Verbrennungsmotor mit nachgeschaltetem Generator oder eine Brennstoffzelle sein. Die Energiequelle 2 könnte z. B. auch eine Oberleitung sein. Das Leistungsverhältnis zwischen Energiespeicher 1 und Energiequelle 2 kann deutlich schwanken. Im Extremfall könnten sogar der Energiespeicher 1 oder die Energiequelle 2 entfallen.

Das Steuerungssystem kann auch in Verbindung mit mehr als einem Energiespeicher 1 eingesetzt werden. In diesem Fall ist jedem Energiespeicher 1 ein eigener Rechenblock 3 zugeordnet. Ihre jeweiligen Speicherleistungen P3 werden dem Addierer 7 zugeführt. Die gegenseitige Beeinflussung der Energiespeicher 1 und der ihnen zugeordneten Rechenblöcke 3 kann dann z. B. durch eine zustandsabhängige Festlegung der jeweiligen Eingabeladegrenzwerte P8 und der Eingabeentladegrenzwerte P10 der jeweiligen Energiequellen 2 erfolgen.

## Patentansprüche

1. Steuerungssystem für ein aus mindestens einem Energiespeicher (1) und einer Energiequelle (2) bestehendes Hybridsystem, wobei das Steuerungssystem aus einem Ladezustand (Z) des mindestens einen Energiespeichers (1), einem Sollbetriebspunkt (P11) der Energiequelle (2) und einer momentan abzugebenden Systemleistung (P1) gemäß mindestens einem Optimierungskriterium eine von dem mindestens einen Energiespeicher (1) abzugebende bzw. aufzunehmende Speicherleistung (P3) und eine von der Energiequelle (2) abzugebende Quellenleistung (P2) ermittelt,
**dadurch gekennzeichnet,**
**daß** zur Ermittlung der Speicherleistung (P3) und der Quellenleistung (P2) auch mindestens ein Ladegrenzwert (P4, P7, P8) und ein mindestens Entladegrenzwert (P5, P9, P10) für den mindestens einen Energiespeicher (1) und ein Leistungsgrenzwert (P12) für die Energiequelle (2) mit herangezogen werden und daß der mindestens eine Ladegrenzwert (P4, P7, P8), der mindestens eine Entladegrenzwert (P5, P9, P10), der Leistungsgrenzwert (P12) und der Sollbetriebspunkt (P11) über eine Schnittstelle (5) des Steuerungssystems parametrierbar sind.

2. Steuerungssystem nach Anspruch 1,
**dadurch gekennzeichnet,**
**daß** dem Steuerungssystem als Ladegrenzwerte (P4, P7, P8) ein aufgrund des mindestens einen Energiespeichers (1) gegebener Energiespeicherladegrenzwert (P7) und ein eingebbarer Eingabeladegrenzwert (P8) vorgegeben werden.

3. Steuerungssystem nach Anspruch 1 oder 2,
**dadurch gekennzeichnet,**
**daß** dem Steuerungssystem als Entladegrenzwerte (P5, P9, P10) ein aufgrund des mindestens einen Energiespeichers (1) gegebener Energiespeicherentladegrenzwert (P9) und ein eingebbarer Eingabeentladegrenzwert (P10) vorgegeben werden.

4. Steuerungssystem nach Anspruch 1, 2 oder 3,
**dadurch gekennzeichnet,**
**daß** auch das mindestens eine Optimierungskriterium über die Schnittstelle (5) des Steuerungssystems vorgebbar ist.

5. Steuerungssystem nach einem der obigen Ansprüche,
**dadurch gekennzeichnet,**
**daß** es aus dem Ladezustand (Z) des mindestens einen Energiespeichers (1) anhand von Leistungskennwerten (A-E) des mindestens einen Energiespeichers (1) einen Zustandsladegrenzwert (P4), einen Zustandsentladegrenzwert (P5) und eine Quellenladeleistung (P6) ermittelt, daß die Leistungskennwerte (A-E) zumindest einen Minimalenergieinhalt (Min) und einen Maximalenergieinhalt (Max) umfassen und daß auch die Leistungskennwerte (A-E) über die Schnittstelle (5) des Steuerungssystems vorgebbar sind.

6. Steuerungssystem nach Anspruch 5,
**dadurch gekennzeichnet,**
**daß** es aus dem Ladezustand (Z) des mindestens einen Energiespeichers (1) eine Grenzsystemleistung (P14) ermittelt, bei der der mindestens eine Energiespeicher (1) von Energieaufnahme auf Energieabgabe und umgekehrt umgeschaltet wird.

7. Steuerungssystem nach Anspruch 6,
**dadurch gekennzeichnet,**
**daß** die Grenzsystemleistung (P14) hysteresebehaftet ist.

8. Steuerungssystem nach Anspruch 6 oder 7,
**dadurch gekennzeichnet,**
**daß** es anhand des Leistungsgrenzwerts (P12) und des Sollbetriebspunkts (P11) ermittelt, ob bei Überschreiten oder bei Unterschreiten der Grenzsystemleistung (P14) von Energieaufnahme auf Energieabgabe umgeschaltet wird.

9. Steuerungssystem nach Anspruch 6, 7 oder 8,
**dadurch gekennzeichnet,**
**daß** die Grenzsystemleistung (P14) nachgeführt wird, wenn der Ladezustand (Z) des mindestens einen Energiespeichers (1) den Minimalenergieinhalt (Min) unterschreitet bzw. den Maximalenergieinhalt (Max) überschreitet.

10. Steuerungssystem nach einem der obigen Ansprüche,
**dadurch gekennzeichnet,**
**daß** die Speicherleistung (P3) über eine Rampe (6) als erstes Eingangssignal einem Addierer (7) zugeführt wird, dem als zweites Eingangssignal die abzugebende Systemleistung (P1) zugeführt wird, und daß als Ausgangssignal die Quellenleistung (P2) ausgegeben wird.

## Claims

1. Control system for a hybrid system comprising at least one energy store (1) and an energy source (2), the control system using a charge state (Z) in the at least one energy store (1), a nominal operating point (P11) of the energy source (2) and a system power (P1) which is currently to be output to ascertain a storage power (P3) which is to be output or received by the at least one energy store (1) and a source power (P2) which is to be output by the energy source (2) on the basis of at least one optimization criterion,
**characterized**
**in that** at least one charge limit value (P4, P7, P8) and at least one discharge limit value (P5, P9, P10) for the at least one energy store (1) and a power limit value (P12) for the energy source (2) are also used at the same time in order to ascertain the storage power (P3) and the source power (P2), and in that the at least one charge limit value (P4, P7, P8), the at least one discharge limit value (P5, P9, P10), the power limit value (P12) and the nominal operating point (P11) can be parameterized via an interface (5) in the control system.

2. Control system according to Claim 1,
**characterized**
**in that** an energy store charge limit value (P7) provided on the basis of the at least one energy store (1) and an input charge limit value (P8) which can be input are prescribed to the control system as charge limit values (P4, P7, P8).

3. Control system according to Claim 1 or 2,
**characterized**
**in that** an energy store discharge limit value (P9) provided on the basis of the at least one energy store (1) and an input discharge limit value (P10) which can be input are prescribed to the control system as discharge limit values (P5, P9, P10).

4. Control system according to Claim 1, 2 or 3,
**characterized**
**in that** the at least one optimization criterion can also be prescribed via the interface (5) in the control system.

5. Control system according to one of the preceding claims,
**characterized**
**in that** it uses the charge state (Z) of the at least one energy store (1) to ascertain a state charge limit value (P4), a state discharge limit value (P5) and a source charge power (P6) on the basis of power characteristic values (A-E) for the at least one energy store (1), in that the power characteristic values (A-E) comprise at least one minimum energy content (Min) and a maximum energy content (Max) and in that the power characteristic values (A-E) can also be prescribed via the interface (5) of the control system.

6. Control system according to Claim 5,
**characterized**
**in that** it uses the charge state (Z) of the at least one energy store (1) to ascertain a critical system power (P14) at which the at least one energy store (1) is changed over from energy absorption to energy output and vice versa.

7. Control system according to Claim 6,
**characterized**
**in that** the critical system power (P14) is subject to hysteresis.

8. Control system according to Claim 6 or 7,
**characterized**
**in that** it uses the power limit value (P12) and the nominal operating point (P11) to ascertain whether there is a changeover from energy absorption to energy output when the critical system power (P14) is exceeded or undershot.

9. Control system according to Claim 6, 7 or 8,
**characterized**
**in that** the critical system power (P14) is corrected if the charge state (Z) of the at least one energy store (1) falls below the minimum energy content (Min) or exceeds the maximum energy content (Max).

10. Control system according to one of the preceding claims,
**characterized**
**in that** the storage power (P3) is supplied to an adder (7) via a ramp (6) as first input signal, the second input signal supplied to said adder being the system power (P1) which is to be output, and in that the output signal which is output is the source power (P2)

## Revendications

1. Système de commande pour un système hybride constitué au moins d'un accumulateur d'énergie (1) et d'une source d'énergie (2), le système de commande déterminant à partir d'un état de charge (Z) du ou des accumulateurs d'énergie (1), d'un point de fonctionnement de consigne (P11) de la source d'énergie (2) et d'une puissance de système à fournir momentanément (P1), selon au moins un critère d'optimisation, une puissance d'accumulateur (P3) à fournir ou à recevoir par le ou les accumulateurs d'énergie (1) et une puissance de source (P2) à fournir par la source d'énergie (2),
**caractérisé par le fait que**, pour la détermination de la puissance d'accumulateur (P3) et de la puissance de source (P2), on exploite aussi au moins une valeur limite de charge (P4, P7, P8) et au moins une valeur limite de décharge (P5, P9, P10) pour le ou les accumulateurs d'énergie (1) et une valeur limite de puissance (P12) pour la source d'énergie (2) et qu'on peut paramétrer par l'intermédiaire d'une interface (5) du système de commande la ou les valeurs limites de charge (P4, P7, P8), la ou les valeurs limites de décharge (P5, P9, P10), la valeur limite de puissance (P12) et le point de fonctionnement de consigne (P11).

2. Système de commande selon la revendication 1,
**caractérisé par le fait qu'**on prescrit au système de commande comme valeurs limites de charge (P4, P7, P8) une valeur limite de charge d'accumulateur d'énergie (P7) donnée en fonction du ou des accumulateurs d'énergie (1) et une valeur limite de charge d'entrée (P8) pouvant être entrée.

3. Système de commande selon la revendication 1 ou 2,
**caractérisé par le fait qu'**on prescrit au système de commande comme valeurs limites de décharge (P5, P9, P10) une valeur limite de décharge d'accumulateur d'énergie (P9) donnée en fonction du ou des accumulateurs d'énergie (1) et une valeur limite de décharge d'entrée (P10) pouvant être entrée.

4. Système de commande selon la revendication 1, 2 ou 3,
**caractérisé par le fait que** le ou les critères d'optimisation peuvent aussi être prescrits par l'intermédiaire de l'interface (5) du système de commande.

5. Système de commande selon l'une des revendications précédentes,
**caractérisé par le fait qu'**il détermine à partir de l'état de charge (Z) du ou des accumulateurs d'énergie (1) à l'aide de valeurs caractéristiques de puissance (A à E) du ou des accumulateurs de puissance (1) une valeur limite de charge d'état (P4), une valeur limite de décharge d'état (P5) et une puissance de charge de source (P6), que les valeurs caractéristiques de puissance (A à E) comprennent au moins un contenu énergétique minimal (Min) et un contenu énergétique maximal (Max) et que les valeurs caractéristiques de puissance (A à E) peuvent aussi être prescrites par l'intermédiaire de l'interface (5) du système de commande.

6. Système de commande selon la revendication 5,
**caractérisé par le fait qu'**il détermine à partir de l'état de charge (Z) du ou des accumulateurs d'énergie (1) une puissance de système limite (P14) pour laquelle le ou les accumulateurs d'énergie (1) sont commutés de consommation d'énergie à fourniture d'énergie et inversement.

7. Système de commande selon la revendication 6,
**caractérisé par le fait que** la puissance de système limite (P14) est soumise à une hystérésis.

8. Système de commande selon la revendication 6 ou 7,
**caractérisé par le fait qu'**il détermine à l'aide de la valeur limite de puissance (P12) et du point de fonctionnement de consigne (P11) s'il faut commuter de consommation d'énergie à fourniture d'énergie si on passe en dessus ou en dessous de la puissance de système limite (P14).

9. Système de commande selon la revendication 6, 7 ou 8,
**caractérisé par le fait que** la puissance de système limite (P14) est adaptée si l'état de charge (Z) du ou des accumulateurs d'énergie (1) devient inférieur au contenu énergétique minimal (Min) ou devient supérieur au contenu énergétique maximal (Max).

10. Système de commande selon l'une des revendications précédentes,
**caractérisé par le fait que** la puissance d'accumulateur (P3) est envoyée via une rampe (6) comme premier signal d'entrée à un additionneur (7) auquel la puissance de système à fournir (P1) est envoyée comme deuxième signal d'entrée et qui fournit comme signal de sortie la puissance de source (P2).
